# EUROPEAN PATENT SPECIFICATION

(11) **EP 4 528 859 B1**
(45) Date of publication and mention of the grant of the patent: **02.12.2026**
(21) Application number: 22744234.0
(22) Date of filing: 17.05.2022
(51) Int. Cl.: H01M 4/86, H01M 4/88, H01M 4/90, H01M 8/0206, H01M 8/0228, H01M 8/0256, H01M 8/1018, H01M 8/0245, H01M 8/10

(54) **BIPOLAR PLATE OF A PROTON-EXCHANGE MEMBRANE FUEL CELL AND METHODS OF MANUFACTURING SAME**
BIPOLARPLATTE EINER PROTONENAUSTAUSCH-MEMBRANE UND HERSTELLUNGSVERFAHREN
PLAQUE BIPOLAIRE D'UNE MEMBRANE À ÉCHANGE DE PROTONS ET MÉTHODE DE FABRICATION

(43) Date of publication of application: 26.03.2025
(73) Proprietor: Universidad Carlos III de Madrid, 28919 Leganés - Madrid (ES)
(72) Inventor: ROMERO VILLARREAL, Carlos, 28919 Leganés (ES); GORDO ODÉRIZ, Elena, 28919 Leganés (ES)
(74) Representative: Pons IP
(86) International application number: PCT/ES2022/070303
(87) International publication number: WO 2023/222930

(56) References cited:
- WO-A1-2016/096806
- CN-A- 112 467 161
- GB-A- 2 017 759
- US-A- 5 953 908
- US-A1- 2008 023 320
- US-A1- 2022 023 946

## Description

The present invention relates to a bipolar plate of a proton-exchange membrane fuel cell made up of titanium or titanium alloys comprising a porous titanium material or titanium alloys and which is completely covered by a titanium nitride coating. In addition, the present invention relates to two methods of manufacturing said bipolar plate by means of metallurgical techniques, the use of space holders, sintering and gas nitriding.

Therefore, the present invention is of interest to the industry dedicated to the manufacture of fuel cells.

### STATE OF THE ART

Bipolar plates (BP) of proton-exchange membrane fuel cells (PEMFC) are one of the critical components to ensure proper functioning of these cells.

With conventional BPs, manufactured in stainless steel or graphite, the weight of this component is between 50 % and 80 % of the total weight of the cell, and the manufacture of channels is complex, which causes it to exceed 30 % of the total cost of the fuel cell. For transportation applications, wherein PEMFCs are the reference hydrogen technology, it is essential to reduce the weight of the structures and simplify the manufacturing process, which would result in improved system performance and lower costs. Table 1 shows some of the requirements that the material used as a bipolar plate must meet.

**Table 1. US Department of Energy Requirements for Bipolar Plates in Transportation Applications [T.U.D. of E. (DOE) E.E. and R.E. Fuel Cell Technologies Office, Fuel Cells, in: Multi-Year Res. Dev. Demonstr. Plan, 2016: pp. 3.4.1-3.4.58].**

| Requirement | Value |
|---|---|
| Corrosion (anode) (µA/cm²) | <1, no active peak |
| Corrosion (cathode) (µA/cm²) | <1 |
| Contact resistance (mΩ cm²) | <10 |
| Flexural strength (MPa) | >25 |

Metal BPs are primarily manufactured in stainless steel [T. Stein, Y. Ein-Eli, Challenges and Perspectives of Metal-Based Proton Exchange Membrane's Bipolar Plates: Exploring Durability and Longevity, Energy Technol. 8 (2020) 1-13*.],* since it does not exhibit a strong passivation of the surface that prevents the capture and donation of electrons, as occurs with metals that are more resistant to corrosion (aluminium and titanium). However, the new more advanced BP targets (Table 1) mean that stainless steel alone does not meet the targets and requires coatings, which eliminates the initial advantage it had over aluminium and titanium, in addition to the fact that its density is much higher. Coatings for this application on steel and other metals range from nitrides (CrN, AIN or TiN, obtained by CVD or PVD), graphene materials, Teflon (PTFE) and PTFE compounds with graphene, or metal nitride particles.

In the case of titanium BP, relevant inventions of coatings on titanium substrates oriented to bipolar plates are listed below, with special emphasis on those based on metal nitrides:
- Titanium coated with one or multiple layers of TiN, TiC, Ti(C,N), CrN, Cr(C,N), (Ti,Cr)N or (Ti,Cr)(C,N) or with a layer of carbon with embedded TiC particles, all these cases using physical deposition techniques, sometimes combined with plasma-assisted nitriding, carburation or carbonitriding [CN111370722A, CN104051743A, CN101800318A, CN102130341A, CN111342073A].
- Titanium coated with titanium nitride (TiN) by means of liquid nitriding [8]. Gas titanium nitriding to form titanium nitride (TiN) is not usually applied in practice due to the high temperature of the process.
- Multilayer coatings based on noble metals with higher conductivity and carbon-based materials. As an example: a layer of nickel or nickel/chrome followed by other layers of gold and graphene, also obtained by means of physical deposition techniques [CN112467161A].
- Graphene coating, using techniques such as electrodeposition [J. Wang, L. Min, F. Fang, W. Zhang, Y. Wang, Electrodeposition of graphene nano-thick coating for highly enhanced performance of titanium bipolar plates in fuel cells, Int. J. Hydrogen Energy. 44 (2019) 16909-16917].

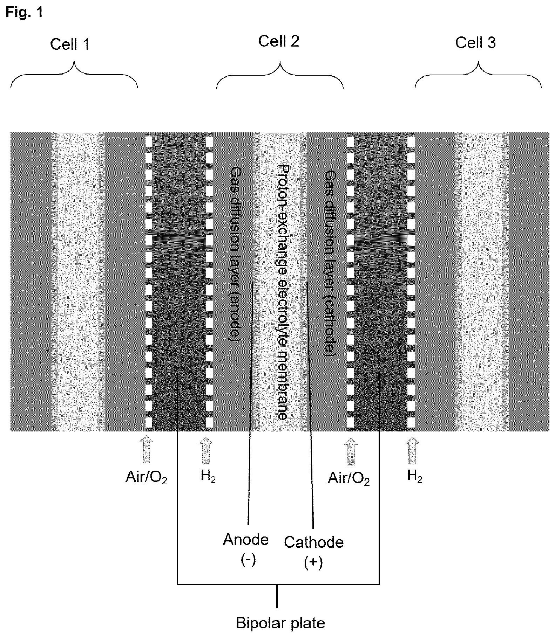

Regarding the fluid field distribution system and elimination of reactants and reagents (also called fluid field system), located on each face of the BP, the current solution involves a design of very fine channels, of the order of hundreds of microns in thickness (fig. 1, left), exhibiting two problems:
▪ First, it does not guarantee optimum fluid distribution in conditions of greater power demand, with notable gas pressure losses [A. Kumar, R.G. Reddy, Materials and design development for bipolar/end plates in fuel cells, J. Power Sources. 129 (2004) 62-67 and B.T. Tsai, C.J. Tseng, Z.S. Liu, C.H. Wang, C.I. Lee, C.C. Yang, S.K. Lo, Effects of flow field design on the performance of a PEM fuel cell with metal foam as the flow distributor, Int. J. Hydrogen Energy. 37 (2012) 13060-13066];
▪ and second, they require complex manufacturing techniques to ensure that there are no defects.

An alternative proposal is the use of sponges or networks of porous material as a fluid field, which have been shown to be more efficient at higher powers than the conventional ones (Fig. 1, right) [A. Baroutaji, J.G. Carton, J. Stokes, A.G. Olabi, Application of Open Pore Cellular Foam for air breathing PEM fuel cell, Int. J. Hydrogen Energy. 42 (2017) 25630-25638].

The materials that have been tested as fluid field bipolar plates based on porous material are mainly nickel, steel or titanium foams or sinters [T. Hottinen, M. Mikkola, T. Mennola, P. Lund, Titanium sinter as gas diffusion backing in PEMFC, J. Power Sources. 118 (2003) 183-188 and WO1998052241A1], as well as copper, steel or titanium sintered felts [Y. Tang, W. Yuan, M. Pan, Z. Wan, Feasibility study of porous copper fiber sintered felt: A novel porous flow field in proton exchange membrane fuel cells, Int. J. Hydrogen Energy. 35 (2010) 9661-9677 and S. Gamburzev, A.J. Appleby, Recent progress in performance improvement of the proton exchange membrane fuel cell (PEMFC), J. Power Sources. 107 (2002) 5-12.]. To improve the properties of the foams, surface modifications are carried out, among which PTFE (Teflon), graphene, titanium nitrides and noble metals such as gold stand out [Y.H. Lee, S.M. Li, C.J. Tseng, C.Y. Su, S.C. Lin, J.W. Jhuang, Graphene as corrosion protection for metal foam flow distributor in proton exchange membrane fuel cells, Int. J. Hydrogen Energy. 42 (2017) 22201-22207.]. In the case of porous materials for titanium bipolar plates, the only coating found has been platinum, which is very expensive and therefore would have little practical application.

### DESCRIPTION OF THE INVENTION

The present invention relates to a bipolar plate of a proton-exchange membrane fuel cell made up of titanium, titanium alloys or any combination thereof comprising a porous titanium material, titanium alloys or any combination thereof and which is completely covered by a titanium nitride coating.

A fuel cell is an electrochemical device that directly transforms chemical energy into electrical energy. Due to a fuel (generally hydrogen H₂) and an oxidiser (such as oxygen O₂ or air) water, electricity are produced in the form of direct current and heat.

A fuel cell can be divided into the various portions:
- Electrodes wherein the following reactions take place
   ∘ *Reaction at the anode:* H₂ -> 2 H⁺ + 2 e⁻
   ∘ *Reaction at the cathode:* ½ O₂ + 2 H⁺ + 2 e⁻ -> H₂O
   ∘ *Overall reaction:* H₂ + ½ O₂ -> H₂O
- Electrolyte the function of which is to separate the gases and enable the passage of protons H⁺ to the cathode and separate the electrons e⁻.
- Bipolar plates the function of which is to separate the cells, conduct the gases and evacuate the H₂O.

The present invention relates to a bipolar plate for fuel cells that use a proton-conducting proton-exchange membrane as an electrolyte, and are therefore known as PEM-type fuel batteries or cells (polymer electrolyte membrane (PEM)). See Figure 1.

The function of the bipolar plate of the present invention is to connect the anode of cell 1, wherein the following reaction occurs:

*H*₂ → 2*H⁺ +* 2*e⁻*

with the cathode of cell 2, wherein the following reaction takes place:

4*H⁺* + 4*e⁻* + *O*₂ → 2*H*₂*O*

Therefore, the bipolar plate of the present invention has a conductivity greater than 100 S/cm and a contact resistance of less than 10 mΩ·cm², so that the electrons e-move from the anode of cell 1 to the cathode of cell 2 therethrough.

Another function of the bipolar plate of the present invention is to distribute the reactants (H₂ and O₂) and collect the products: water (H₂O) and unreacted reactants through the inlet and outlet channels and through the inlet and outlet conduits.

Another function of the bipolar plate of the present invention is to provide structural integrity to the PEM-type fuel cell assembly and manage the temperature thereof.

Therefore, a first aspect the present invention relates to a bipolar plate of a proton-exchange membrane fuel cell (hereinafter the bipolar plate of the invention) with an upper face and a lower face characterised in that
▪ said plate is composed of titanium (Ti) ortitanium alloys,
▪ said plate comprises
   ∘ a first cavity on the upper face and a second cavity on the lower face, a porous material is arranged in said cavities, wherein said porous material is made up of titanium (Ti) or titanium alloys, wherein the pores of said porous material are interconnected and wherein the pores of said porous material are between 150 µm and 250 µm in diameter, as measured by scanning electron microscope,
   ∘ at least one first inlet conduit for a first gas or a second gas, wherein said first inlet conduit for a first gas or a second gas is connected to the first cavity through at least one first inlet channel for a first gas or a second gas,
   ∘ at least one second inlet conduit for a first gas or a second gas, wherein said second inlet conduit for a first gas or a second gas is connected to the second cavity through at least one second inlet channel for a first gas or a second gas,
   ∘ at least one first outlet conduit for a first gas or a second gas, wherein said first outlet conduit for a first gas or a second gas is connected to the first cavity through at least one first outlet channel for a first gas or a second gas, and
   ∘ at least one second outlet conduit for a first gas or a second gas, wherein said second outlet conduit for a first gas or a second gas is connected to the second cavity through at least one second outlet channel for a first gas or a second gas
▪ and said plate (1) is coated with titanium nitride on the entire surface thereof.

The bipolar plate of the present invention is made up of titanium (Ti) or titanium alloys. Preferably, the titanium alloys are alpha (α) type titanium alloys, i.e., with a compact hexagonal crystalline structure (hcp) called the alpha (α) phase. More preferably the titanium alloys are selected from among Ti-6Al-4V, Ti-6Al y Ti-8Al.

In addition, the porous material that is placed in the cavities of the bipolar plate is made up of titanium (Ti) or titanium alloys. Preferably, the titanium alloys are alpha (α) type titanium alloys, i.e., with a compact hexagonal crystalline structure (hcp) called the alpha (α) phase. More preferably the titanium alloys are selected from among Ti-6Al-4V, Ti-6Al y Ti-8Al.

In a preferred embodiment of the bipolar plate of the present invention, on the anode side, the inlet and outlet channels connect with an inlet conduit for H₂ and with an outlet conduit for the H₂ that remains unreacted. On the cathode face, the inlet and outlet channels connect with the inlet conduit for air or O₂ and with the outlet conduit for unreacted air/O₂ and the H₂O.

In a preferred embodiment of the bipolar plate of the present invention said bipolar plate has a thickness between 500 µm and 3 mm.

In another preferred embodiment of the bipolar plate of the present invention, the first cavity or the second cavity have an independent thickness of between 150 µm and 1 mm.

In another preferred embodiment of the bipolar plate of the present invention, the first cavity or the second cavity are arranged concentrically to the bipolar plate.

In another preferred embodiment of the bipolar plate of the present invention, the first cavity and the second cavity have equal dimensions.

In another preferred embodiment of the bipolar plate of the present invention, the first gas is H₂ and the second gas is O₂ or air, and the first gas is O₂ or air and the second gas is H₂.

The porous material arranged in the first cavity and in the second cavity has pores with a size in diameter between 150 µm and 250 µm.

The advantages exhibited by the bipolar plate of the present invention are the following:
- the use of titanium or titanium alloys as the base material of the bipolar plate of the invention ensures a low weight (represents a saving of 40 % in weight with respect to a steel plate of the same geometry), high mechanical resistance (greater than 50 MPa) and high corrosion resistance (corrosion rate less than 1 µA/cm²);
- the use of porous titanium or titanium alloy materials further reduces the weight of the bipolar plate and increases flow efficiency, and
- the titanium nitride coating on the entire surface of the bipolar plate gives it the required requirements for its use (see Table 1), preventing corrosion and providing resistance to contact and flexural strength.

A second aspect of the invention relates to a first method of manufacturing the bipolar plate of the present invention (hereinafter the first method of the invention), characterised in that it comprises the following steps:
a) pouring powders selected from titanium, titanium hydride, titanium alloys or any combination thereof, into a mould comprising
   - a first cavity and a second cavity,
   - a first inlet channel (5) and a second inlet channel (10), and
   - a first outlet channel (7) and a second outlet channel (9),
   and pressing at a pressure between 100 MPa and 600 MPa; and
b) sintering and gas nitriding of the pressed product obtained in step (a) to obtain a preform of the bipolar plate comprising a titanium nitride (TiN) coating on the surface thereof,
c) preparing a homogeneous mixture of
   - a powder selected from titanium, titanium hydride, titanium alloys or any combination thereof, and
   - an ammonium bicarbonate powder space holder ((NH₄)HCO₃) with a particle size between 150 µm and 250 µm,
   in a mixer operating at a speed between 40 rpm and 80 rpm for at least a period of time of 1 h, wherein the proportion by volume of ammonium bicarbonate ((NH₄)HCO₃) in the mixture is between 50 % v/v and 70 % v/v,
d) pouring the homogeneous mixture obtained in step (c) into a mould in the shape of the first cavity and the second cavity and pressing at a pressure of between 100 MPa and 600 MPa;
e) removing the ammonium bicarbonate space holder ((NH₄)HCO₃) of the pressed product in step (d) by heat treatment at a temperature between 40 °C and 120 °C for a period of time between 4 h and 12 h,
f) sintering and gas nitriding of the porous material arranged in the mould in the shape of the first cavity (2) and the second cavity (3) obtained in step (e) to form a titanium nitride (TiN) coating on said porous material, and
g) assembling the porous material coated with titanium nitride obtained in step (f) with the preform of the bipolar plate (1) comprising a titanium nitride coating on the surface thereof.

The first step of the first method of the invention, step (a), relates to the pouring of powders selected from titanium, titanium hydride, titanium alloys or any combination thereof, into a mould comprising
- a first cavity and a second cavity,
- a first inlet channel (5) and a second inlet channel (10), and
- a first outlet channel (7) and a second outlet channel (9),
and pressing at a pressure between 100 MPa and 600 MPa.

In a preferred embodiment of step (a) of the first method of the present invention, already prepared titanium alloys can be used or said alloys can be prepared in situ, mixing their fundamental components in powder form and pouring said mixture directly into the mould. Preferably, the titanium alloys are alpha (α) type titanium alloys, i.e., with a compact hexagonal crystalline structure (hcp) called the alpha (α) phase. Preferably, the titanium alloys are selected from among Ti-6Al-4V, Ti-6Al and Ti-8Al.

In another preferred embodiment of the first method of the present invention, said method comprises an additional step (a1), between step (a) and step (b) of machining the compacted powder to form the inlet and outlet conduits (preferably by means of milling).

In another preferred embodiment of the first method of the present invention, the mould used in step (a) further comprises mandrels to form the inlet and outlet conduits.

The step (b) of the first method of the invention relates to the sintering and gas nitriding of the pressed product obtained in step (a) to obtain a preform of the bipolar plate comprising a first cavity and a second cavity.

In a preferred embodiment of step (b) of the first method of the present invention, vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa. The gas nitriding is preferably carried out with the surface rough and clean.

In another preferred embodiment of the first method of the present invention, in step (b), sintering is carried out in a furnace at a temperature between 900 °C and 1400 °C and at a pressure between 0.05 MPa and 0.2 MPa in an argon (Ar) atmosphere for a period of time between 1 h and 4 h, and the gas nitriding of the sintered product is carried out in a furnace under a nitrogen atmosphere at a temperature between 850 °C and 1200 °C for a period of time between 1 h and 4 h, wherein the nitrogen pressure is between 0.05 MPa and 0.2 MPa. The gas nitriding is preferably carried out with the surface rough and clean.

In another preferred embodiment of the first method of the present invention, the sintering and gas nitriding of step (b) is carried out in a single step, in a single furnace, at a temperature between 850 °C and 1200 °C first under an argon (Ar) atmosphere for a period of time between 30 min and 4 h, wherein the argon pressure is between 0.05 MPa and 0.2 MPa, and then under a nitrogen atmosphere for a period between 1 h and 4 h, wherein the nitrogen pressure is between 0.05 MPa and 0.2 MPa.

The step (c) of the first method of the invention relates to the preparation of a homogeneous mixture of a powder selected from
- titanium, titanium hydride, titanium alloys, or any combination thereof, and
- an ammonium bicarbonate space holder ((NH₄)HCO₃) with a size between 150 µm and 250 µm,
in a mixer operating at a speed between 40 rpm and 80 rpm for at least a period of time of 1 h, wherein the proportion by volume of ammonium bicarbonate ((NH₄)HCO₃) in the mixture is between 50 % v/v and 70 % v/v. The size of the ammonium bicarbonate space holder ((NH₄)HCO₃) is preferably obtained by means of sieving.

In a preferred embodiment of step (c) of the first method of the present invention, already prepared titanium alloys can be used or said alloys can be prepared in situ, mixing their fundamental components in powder form in a mixer. Preferably, the titanium alloys are alpha (α) type titanium alloys, i.e., with a compact hexagonal crystalline structure (hcp) called the alpha (α) phase. Preferably, the titanium alloys are selected from among Ti-6Al-4V, Ti-6Al and Ti-8Al.

In step (c) of the first method of the present invention, the preparation of the homogeneous mixture is carried out in a mixer that operates at a speed of between 40 rpm and 80 rpm for at least a period of time of 1 h, preferably in a period of time between 30 min and 4 h, more preferably between 1 h and 2 h. Under these operating conditions, the homogeneity of the mixture is guaranteed.

The step (d) of the first method of the present invention relates to pouring the homogeneous mixture obtained in step (c) into a mould in the shape of the first cavity and the second cavity and pressing at a pressure of between 100 MPa and 600 MPa, thus obtaining the highest density and integrity of the porous material and avoiding the creation of cracks.

The step (e) of the first method of the present invention relates to the elimination of the ammonium bicarbonate space holder ((NH₄)HCO₃) of the product pressed in step (d) by heat treatment at a temperature between 40 °C and 120 °C for a period of time between 4 h and 12 h.

The use of a space holder such as ammonium bicarbonate ((NH₄)HCO₃) enables the pore size of the porous material to be adjusted, as well as the elimination of the space holder in a simple way without requiring high temperatures or solvents.

The step (f) of the first method relates to the sintering and gas nitriding of the porous material arranged in the mould in the shape of the first cavity (2) and the second cavity (3) obtained in step (e) to form a titanium nitride (TiN) coating on said porous material.

In a preferred embodiment of step (f) of the first method of the present invention, vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa. The gas nitriding is preferably carried out with the surface rough and clean.

In another preferred embodiment of the first method of the present invention, in step (f), sintering is carried out in a furnace at a temperature between 900 °C and 1400 °C and at a pressure between 0.05 MPa and 0.2 MPa in an argon (Ar) atmosphere for a period of time between 1 h and 4 h, and the gas nitriding of the sintered product is carried out in a furnace under a nitrogen atmosphere at a temperature between 850 °C and 1200 °C for a period of time between 1 h and 4 h, wherein the nitrogen pressure is between 0.05 MPa and 0.2 MPa. The gas nitriding is preferably carried out with the surface rough and clean.

In another preferred embodiment of the first method of the present invention, the sintering and gas nitriding of step (f) is carried out in a single step, in a single furnace, at a temperature between 900 °C and 1200 °C first under an argon (Ar) atmosphere for a period of time between 30 min and 4 h, wherein the argon pressure is between 0.05 MPa and 0.2 MPa, and then under a nitrogen atmosphere for a period between 1 h and 4 h, wherein the nitrogen pressure is between 0.05 MPa and 0.2 MPa.

In all the preferred embodiments of the first method of the present invention, they result in a good cohesion of the porous material. The porosities obtained are open, with high connectivity between pores, which enable the passage of gases in the operation of the bipolar plate. Thanks to the method of the present invention, porosity levels of 65% have been obtained, maintaining the integrity of the porous material in the bipolar plate and exhibiting a flexural strength greater than 50 MPa.

Said titanium nitride coating gives the assembly the required requirements for use thereof according to Table 1, preventing corrosion and providing resistance to contact and flexural strength.

In a preferred embodiment of the first method of the present invention, in step (b), the titanium nitride coating of the preform of the bipolar plate has a thickness between 0.5 µm and 10 µm.

In another preferred embodiment of the first method of the present invention, in step (f), the titanium nitride (TiN) coating of the porous material has a thickness between 0.5 µm and 10 µm.

In another preferred embodiment of the first method of the present invention, the titanium nitride coating of the preform of the bipolar plate obtained in step (b) and the titanium nitride coating of the porous material obtained in step (f) have the same thickness. Preferably, the titanium nitride coating of the preform of the bipolar plate and the titanium nitride coating of the porous material are arranged on the same level.

The step (g) of the first method of the present invention relates to the assembly of the titanium nitride-coated porous material obtained in step (f) with the preform of the bipolar plate comprising a titanium nitride coating on the surface thereof.

A third aspect of the present invention relates to a second method for producing the bipolar plate of the present invention (hereinafter the second method of the invention), characterised in that it comprises the following steps:
i) pouring powders selected from titanium, titanium hydride, titanium alloys or any combination thereof, into a mould comprising
   - a first cavity and a second cavity,
   - a first inlet channel (5) and a second inlet channel (10), and
   - a first outlet channel (7) and a second outlet channel (9),
   and pressing at a pressure between 100 MPa and 600 MPa;
ii) preparing a homogeneous mixture of
   - a powder selected from titanium, titanium hydride, titanium alloys or any combination thereof, and
   - an ammonium bicarbonate powder space holder with a particle size between 150 µm and 250 µm,
   in a mixer operating at a speed between 50 rpm and 60 rpm for at least a period of 1 h, wherein the proportion by volume of ammonium bicarbonate in the mixture is between 50 % v/v and 70 % v/v,
iii) pouring the homogeneous mixture obtained in step (ii) into the first cavity and into the second cavity of the preform of the bipolar plate (1) obtained in step (i) and pressing at a pressure between 100 MPa and 600 MPa;
iv) removing the ammonium bicarbonate space holder from the product pressed in step (iii) by heat treatment at a temperature between 40 °C and 120 °C for a period of time between 4 h and 12 h,
v) vacuum sintering and gas nitriding of the product obtained in step (iv) to form a titanium nitride coating on said product.

The step (i) of the second method of the present invention relates to the pouring of powders selected from titanium, titanium hydride, titanium alloys or any combination thereof, into a mould comprising
- a first cavity (2) and a second cavity (3),
- a first inlet channel (5) and a second inlet channel (10), and
- a first outlet channel (7) and a second outlet channel (9),
and pressing at a pressure between 100 MPa and 600 MPa.

In a preferred embodiment of step (i) of the second method of the present invention, already prepared titanium alloys can be used or said alloys can be prepared in situ, mixing their fundamental components in powder form and pouring said mixture directly into the mould. Preferably, the titanium alloys are alpha (α) type titanium alloys, i.e., with a compact hexagonal crystalline structure (hcp) called the alpha (α) phase. Preferably, the titanium alloys are selected from among Ti-6Al-4V, Ti-6Al and Ti-8Al.

In a preferred embodiment of the second method of the present invention, said method further comprises an additional step (i1), between step (i) and step (ii) of machining the compacted powder obtained in step (i) to form the inlet and outlet conduits (preferably by means of milling).

In another preferred embodiment of the second method of the present invention, the mould used in step (i) further comprises mandrels to form the inlet and outlet conduits.

The step (ii) of the second method of the present invention relates to the preparation of a homogeneous mixture of
- a powder selected from titanium, titanium hydride, titanium alloys or any combination thereof, and
- an ammonium bicarbonate powder space holder with a particle size between 150 µm and 250 µm,
in a mixer operating at a speed between 50 rpm and 60 rpm for at least a period of 1 h, wherein the proportion by volume of ammonium bicarbonate in the mixture is between 50 % v/v and 70 % v/v. The size of the ammonium bicarbonate space holder ((NH₄)HCO₃) is preferably obtained by means of sieving.

In a preferred embodiment of step (ii) of the second method of the present invention, already prepared titanium alloys can be used or said alloys can be prepared in situ, mixing their fundamental components in powder form in a mixer. Preferably, the titanium alloys are alpha (α) type titanium alloys, i.e., with a compact hexagonal crystalline structure (hcp) called the alpha (α) phase. Preferably, the titanium alloys are selected from among Ti-6Al-4V, Ti-6Al and Ti-8Al.

In step (ii) of the second method of the present invention, the preparation of the homogeneous mixture is carried out in a mixer that operates at a speed of between 40 rpm and 80 rpm for at least a period of time of 1 h, preferably in a period of time between 30 min and 4 h, more preferably between 1 h and 2 h. Under these operating conditions, the homogeneity of the mixture is guaranteed.

The step (iii) of the second method of the present invention relates to the pouring of the homogeneous mixture obtained in step (ii) into the first cavity and into the second cavity of the preform of the bipolar plate obtained in step (i) and pressing at a pressure between 100 MPa and 600 MPa;
In a preferred embodiment of the second method of the present invention, the step (iii) is carried out sequentially, wherein the homogeneous mixture obtained in step (ii) is first poured into the first cavity of the mould and pressed at a pressure of between 100 MPa and 600 MPa and then the homogeneous mixture obtained in step (ii) is poured into the second cavity of the mould and pressed at a pressure of between 100 MPa and 600 MPa.

The step (iv) of the second method of the present invention relates to the elimination of the ammonium bicarbonate space holder from the product pressed in step (iii) by heat treatment at a temperature between 40 °C and 120 °C for a period of time between 4 h and 12 h,

The use of a space holder such as ammonium bicarbonate ((NH₄)HCO₃) enables the pore size of the porous material to be adjusted, as well as the elimination of the space holder in a simple way without requiring high temperatures or solvents.

The step (v) of the second method of the present invention relates to the sintering and gas nitriding of the product obtained in step (iv) to form a titanium nitride coating on said product.

In a preferred embodiment of the second method of the present invention, in step (v), vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa.

In another preferred embodiment of the first method of the present invention, in step (v), sintering is carried out in a furnace at a temperature between 900 °C and 1400 °C and at a pressure between 0.05 MPa and 0.2 MPa in an argon (Ar) atmosphere for a period of time between 1 h and 4 h, and the gas nitriding of the sintered product is carried out in a furnace under a nitrogen atmosphere at a temperature between 850 °C and 1200 °C for a period of time between 1 h and 4 h, wherein the nitrogen pressure is between 0.05 MPa and 0.2 MPa. The gas nitriding is preferably carried out with the surface rough and clean.

In another preferred embodiment of the second method of the present invention, the sintering and gas nitriding of step (v) is carried out in a single furnace, at a temperature between 900 °C and 1200 °C, first under an argon atmosphere for a period of time between 30 min and 4 h, wherein the argon pressure is between 0.05 MPa and 0.2 MPa, and then under a nitrogen atmosphere for a period of time between 1 h and 4 h, wherein the nitrogen pressure is between 0.05 MPa and 0.2 MPa.

In all the preferred embodiments of the second method of the present invention, they result in a good cohesion of the porous material. The porosities obtained are open, with high connectivity between pores, which enable the passage of gases in the operation of the bipolar plate. Thanks to the method of the present invention, porosity levels of 65% have been obtained, maintaining the integrity of the porous material in the bipolar plate and exhibiting a flexural strength greater than 50 MPa.

Said titanium nitride coating gives the assembly the required requirements for use thereof according to Table 1, preventing corrosion and providing resistance to contact and flexural strength. Preferably the titanium nitride coating obtained in step (v) has a thickness between 0.5 µm and 10 µm.

The advantages of the first and second methods of the present invention are as follows:
- The use of powder metallurgy techniques to manufacture titanium-based BP components enables a high productivity, suitable for mass manufacturing and reduces machining costs. In addition, powder metallurgy makes it possible to reduce the manufacturing costs of parts compared to conventional titanium processing techniques.
- The use of the space holders technique for manufacturing the titanium-based PEMFC bipolar plate enables porous areas to be manufactured with on-demand features in a simple and scalable way.
- The use of non-plasma assisted gas nitriding or without electric fields to obtain titanium nitride coatings on titanium substrates simplifies the complexity of the equipment, lowering costs without compromising the final properties of the bipolar plate.
- The preferred embodiment of sintering/nitriding in a single step in a single furnace for manufacturing titanium components with titanium nitride coatings greatly simplifies the manufacturing process.

Throughout the description and the claims, the word "comprise" and its variants are not intended to exclude other technical features, additions, components or steps. For those skilled in the art, other objects, advantages and features of the invention will be deduced from both the description and the practical use of the invention. The following examples and figures are provided by way of illustration, and are not intended to be limiting of the present invention.

### DESCRIPTION OF THE FIGURES

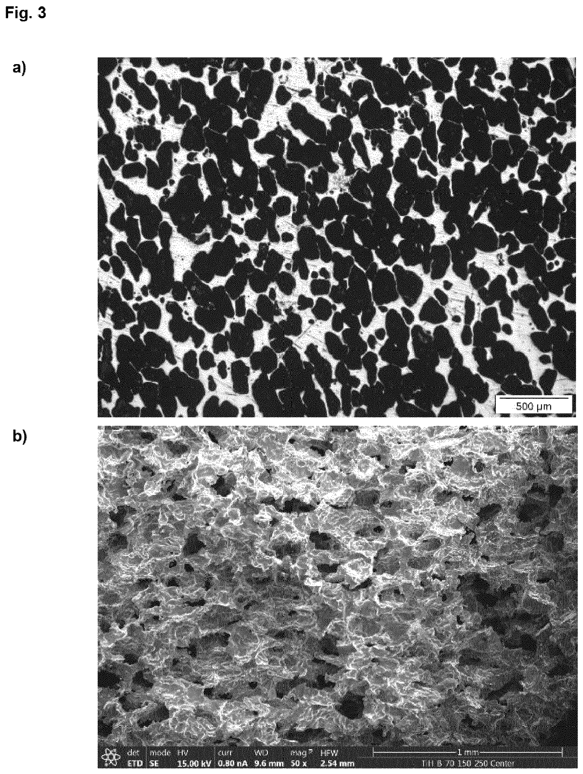

**Fig. 1** General diagram of a PEM type fuel cell.
**Fig. 2** (a) Front view of the bipolar plate of the invention wherein sections 1, 2 and 3 are indicated (b) Profile view in sections 1, 2 and 3, wherein the following elements are shown
   (1) Bipolar plate
   (2) First cavity
   (3) Second cavity
   (4) First gas or second gas inlet conduit
   (5) First gas or second gas inlet channel
   (6) First gas or second gas outlet conduit
   (7) First gas or second gas outlet channel
   (8) Second outlet conduit of the first gas or the second gas
   (9) Second outlet channel of the first gas or the second gas
   (10) Second inlet conduit of the first gas or the second gas
   (11) Second inlet channel of the first gas or the second gas
**Fig. 3****.** (a) Titanium foam with total porosity of 65% and pore-forming size in the range 150 to 250 µm: microstructure and (b) Fracture surface after three-point flexural test.

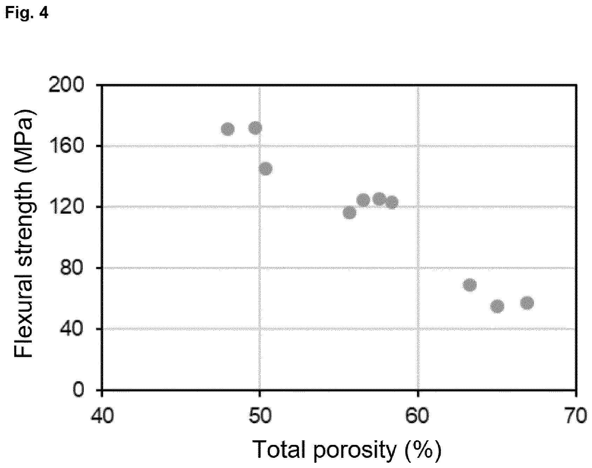

**Fig. 4** Flexural strength as a function of porosity.

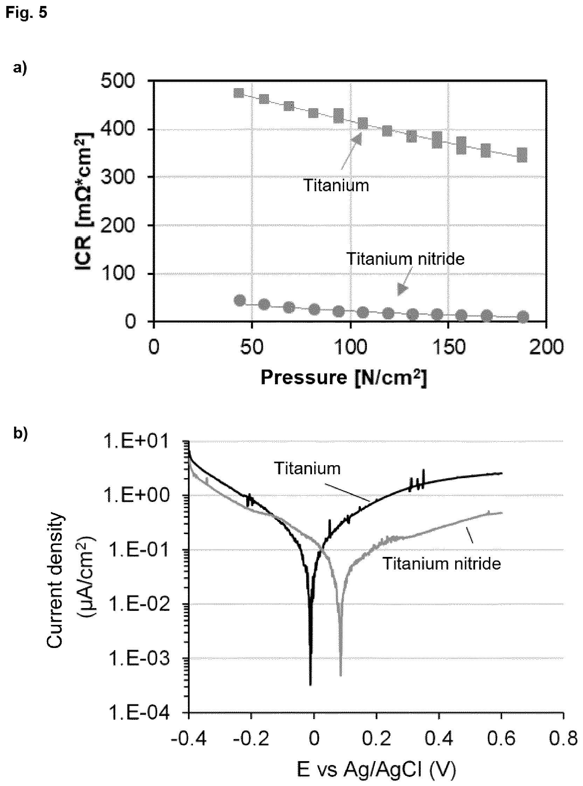

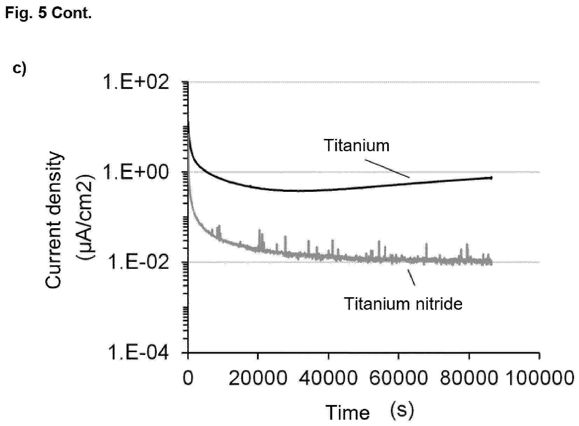

**Fig. 5** Behaviour of titanium before and after nitriding: contact resistance (a), corrosion under anodic conditions (b) and corrosion under cathodic conditions (c).

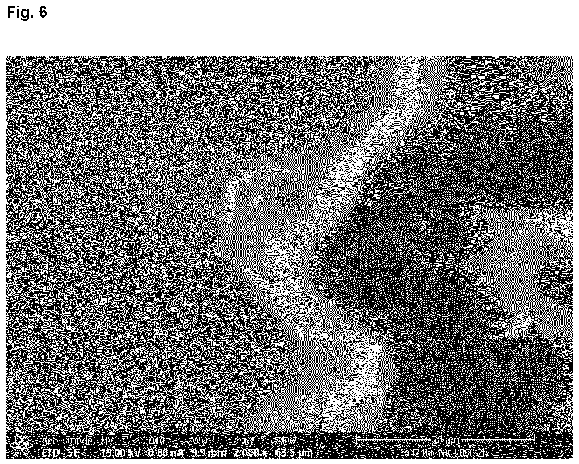

**Fig. 6** Surface of porous titanium material after gas nitriding, showing nitride layer (arrows).

### EXAMPLES

Next, the invention will be illustrated by means of assays performed by the inventors, which demonstrate the effectiveness of the invention.

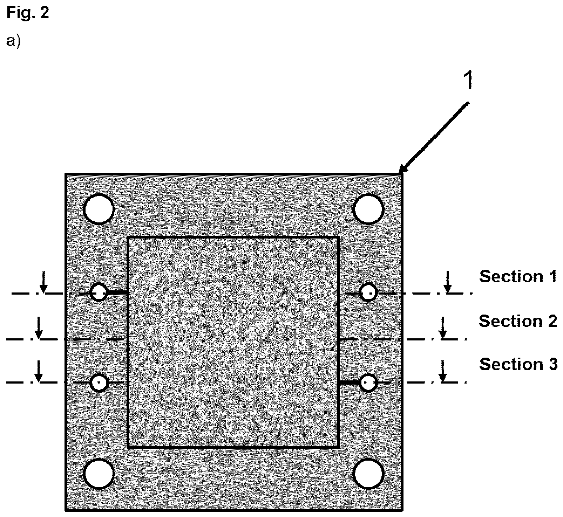

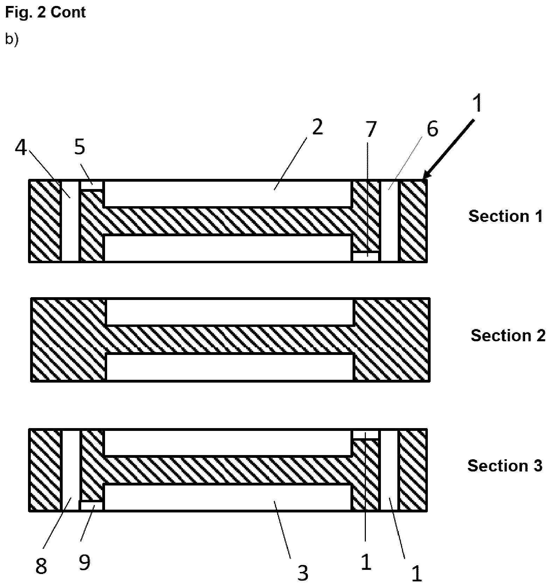

Figure 2 (a) and (b) show a front view and a profile view in sections 1, 2 and 3, wherein
(1) Bipolar plate
(2) First cavity
(3) Second cavity
(4) First gas or second gas inlet conduit
(5) First gas or second gas inlet channel
(6) First gas or second gas outlet conduit
(7) First gas or second gas outlet channel
(8) Second outlet conduit of the first gas or the second gas
(9) Second outlet channel of the first gas or the second gas
(10) Second inlet conduit of the first gas or the second gas
(11) Second inlet channel of the first gas or the second gas

a) Method of manufacturing the preform of the bipolar plate (1) comprising cavities (2, 3) and inlet and outlet conduits and channels (4, 5, 6, 7, 8, 9, 10, 11):
   ∘ Titanium hydride powder (TiH₂) with particle size <63 µm and irregular morphology from AMG Titanium Alloys & Coatings (GfE Metalle und Materialien GmbH).
   ∘ Pouring the titanium hydride powders into a high-speed steel mould comprising cavities (2, 3) and inlet and outlet conduits (4, 5, 6, 7, 8, 9, 10, 11), and pressing at 200 MPa with a hydraulic press.
   ∘ Sintering at 1250 °C for 2 h in high vacuum (10⁻⁶ MPa) in a Carbolite ceramic tube furnace with a high vacuum system (RV5 rotary pump and Edwards brand Diffstak 63/150M, 210-225V, 1-ph, 50/60Hz diffuser pump). Heating curve: 5 °C/min up to 450 °C, 2 °C/min between 450 °C and 650 °C, and 5 °C/min between 650 °C and 1250 °C. Cooling curve: 5 °C/min to room temperature.
   ∘ Roughing and cleaning of the surface.
   ∘ Gas nitriding in a furnace at 1000 °C for 2 h in a Carbolite ceramic tube furnace with a 1 bar N₂ atmosphere (Nippon Gases). Initial purge of 45 min. Heating and cooling rate: 5 ° C/min.
b) Method of manufacturing the porous material arranged in the cavities (2, 3):
   ∘ Starting powders: AMG Titanium Alloys & Coatings (GfE Metalle und Materialien GmbH) titanium hydride powder (TiH₂) of <63 µm particle size and irregular morphology and Sigma-Aldrich Reagent Plus^{®} ammonium bicarbonate powder (NH₄HCO₃), ≥99.0% pure.
   ∘ Sieving of the space holder between 150 µm and 250 µm using sieves of 150 µm and 250 µm light, for 5 minutes assisted by vibration.
   ∘ Mixing of the titanium hydride and bicarbonate powders with a ratio of 60% by volume for 1 hour at 50 rpm in a three-dimensional Turbula mixer (WAB Group).
   ∘ Pouring of the powder mixture into the high-speed steel mould with the preform of the cavities (2, 3) and the inlet and outlet conduits and channels (4, 5, 6, 7, 8, 9, 10, 11) first manufactured (a), pressed at 200 MPa with a hydraulic press.
   ∘ Removal of the space holder in an oven at 80 °C for 6 hours.
   ∘ Sintering at 1250 °C for 2 h in high vacuum (10⁻⁶ MPa) in a Carbolite ceramic tube furnace with a high vacuum system (RV5 rotary pump and Edwards brand Diffstak 63/150M, 210-225V, 1-ph, 50/60Hz diffuser pump). Heating curve: 5 °C/min up to 450 °C, 2 °C/min between 450 °C and 650 °C, and 5 °C/min between 650 °C and 1250 °C. Cooling curve: 5 °C/min to room temperature. The measurements of porosity and interconnectivity have been carried out using the Archimedean method. The porosities obtained are open, with high connectivity between pores, which enable the passage of gases in the operation of the bipolar plate (Fig. 3). Images obtained in a FEI Teneo scanning electron microscope. Fig. 3b shows the interconnectivity and homogeneity of the porosity after three-point flexural test, with the following features:
      Three-point flexural tests on bars with a rectangular cross section with minimum dimensions of 4x11x25 mm, with a distance between support points of 23 mm. The test was performed at a speed of 0.5 mm/min with a 15 kN load cell in a Microtest universal test kit. The porous material obtained has a flexural strength greater than 50 MPa (Fig 4).
   ∘ Roughing and cleaning of the surface.
   ∘ Gas nitriding in a furnace at 1000 °C for 2 h in a Carbolite ceramic tube furnace with a 1 bar N₂ atmosphere (Nippon Gases). Initial purge of 45 min. Heating and cooling rate: 5 ° C/min. With a gas nitriding at 1000 °C for 2 hours in the presence of N₂ a surface layer of titanium nitride is achieved with sufficient thickness to protect against corrosion and with a structure with a predominant TiN presence (confirmed by X-ray diffraction), which enables the surface contact resistance to be approximately 10 mΩ·cm², improving the behaviour of the uncoated substrate to levels required by the application (Fig. 5a). This treatment also enables a homogeneous coating to be obtained inside the porous samples, thus reducing corrosion on the entire exposed surface (Fig. 5b, 5c).
c) Assembling the porous material in the cavities (2, 3) of the preform of the bipolar plate (1).

The characterisation techniques used were
- contact resistance in the range of 40 to 200 N/cm² against Sigracet GDL 28BC carbon paper, using a Microtest mechanical testing micromachine, made to measure with a 5 kN load cell, and a BK Precision 1687B model direct current generator, applying a current of 2 A.
- corrosion under anodic conditions: galvanic polarisation at 70 °C in a solution of H₂O with H₂SO₄ with pH=3 with argon purge, between -0.4 and +0.6 V vs Ag/AgCl, and
- corrosion under cathodic conditions: chronoamperometry for 24 h at 70 °C in a solution of H₂O with H₂SO₄ of pH=3 with air bubbling, at a constant potential of +0.6 V vs Ag/AgCl.

The corrosion measurements were made using an Autolab PGSTAT302N potentiostat/galvanostat, with a three-electrode configuration, with Tipfix working electrode support, from Bank Electronik - Intelligent Controls GmbH, Ag/AgCl SE11 reference electrode from SensorTechnik Meinsberg and counter-electrode of platinised titanium from Bank Electronik - Intelligent Controls GmbH.

The results presented in Figures 5a-c show the evolution of the contact resistance with pressure, the galvanic polarisation curve and the amperometry. Regarding the contact resistance (Fig. 5a), uncoated titanium has a very high value (in the range of 300 and 400 mΩ cm²), associated with the passive layer of titanium oxide, and, after surface modification, the contact resistance value is less than 10 mΩ cm², meeting the requirements of the application (Table 1). Regarding corrosion resistance in both anodic and cathodic conditions (Fig. 5b-c), the uncoated titanium have values close to those required by the application, greater than 1 µA/cm²and, after coating, the corrosion requirements are met (Table 1).

Fig. 6 shows a scanning electron microscope image with a secondary electron detector (FEI TENEO Microscope) of the porous material after gas nitriding, showing the nitrided layer (arrows).

## Claims

1. A bipolar plate (1) of a proton-exchange membrane fuel cell with an upper face and a lower face **characterised in that**
▪ said plate (1) is made up of titanium or titanium alloys,
▪ said plate (1) comprises
∘ a first cavity (2) on the upper face and a second cavity (3) on the lower face, a porous material is arranged in said cavities (2, 3), wherein said porous material is made up of titanium or titanium alloys, wherein the pores of said porous material are interconnected and wherein the pores of said porous material are between 150 µm and 250 µm in diameter, as measured by scanning electron microscope,
∘ at least one first inlet conduit (4) for a first gas or a second gas, wherein said first inlet conduit (4) for a first gas or a second gas is connected to the first cavity (2) through at least one first inlet channel (5) for a first gas or a second gas,
∘ at least one second inlet conduit (10) for a first gas or a second gas, wherein said second inlet conduit (10) for a first gas or a second gas is connected to the second cavity (3) through at least one second inlet channel (11) for a first gas or a second gas,
∘ at least one first outlet conduit (6) for a first gas or a second gas, wherein said first outlet conduit (6) for a first gas or a second gas is connected to the first cavity (2) through at least one first outlet channel (7) for a first gas or a second gas, and
∘ at least one second outlet conduit (8) for a first gas or a second gas, wherein said second outlet conduit (8) for a first gas or a second gas is connected to the second cavity (3) through at least one second outlet channel (9) for a first gas or a second gas,
▪ and said plate (1) is coated with titanium nitride on the entire surface thereof.

2. The bipolar plate (1) according to claim 1, wherein the plate (1) has a thickness between 500 µm and 3 mm.

3. The bipolar plate (1) according to any of claims 1 or 2, wherein the first cavity (2) or the second cavity (3) have an independent thickness between 150 µm and 1 mm.

4. The bipolar plate (1) according to any of claims 1 to 3, wherein the first cavity (2) or the second cavity (3) are arranged concentrically to the bipolar plate (1).

5. The bipolar plate (1) according to any of claims 1 to 4, wherein the first cavity (2) and the second cavity (3) have equal dimensions.

6. A method for manufacturing the bipolar plate (1) according to any of claims 1 to 5, **characterised in that** it comprises the following steps:
a) pouring powders selected from titanium, titanium hydride, titanium alloys or any combination thereof, into a mould comprising
• a first cavity (2) and a second cavity (3),
• a first inlet channel (5) and a second inlet channel (10), and
• a first outlet channel (7) and a second outlet channel (9),
and pressing at a pressure between 100 MPa and 600 MPa; and
b) sintering and gas nitriding of the pressed product obtained in step (a) to obtain a preform of the bipolar plate (1) comprising a titanium nitride coating on the surface thereof,
c) preparing a homogeneous mixture of
• a powder selected from titanium, titanium hydride, titanium alloys or any combination thereof, and
• an ammonium bicarbonate powder space holder with a particle size between 150 µm and 250 µm,
in a mixer operating at a speed between 50 rpm and 60 rpm for at least a period of 1 h, wherein the proportion by volume of ammonium bicarbonate in the mixture is between 50 % v/v and 70 % v/v,
d) pouring the homogeneous mixture obtained in step (c) into a mould in the shape of the first cavity (2) and the second cavity (3) and pressing at a pressure of between 100 MPa and 600 MPa;
e) removing the ammonium bicarbonate space holder from the product pressed in step (d) by heat treatment at a temperature between 40 °C and 120 °C for a period of time between 4 h and 12 h,
f) sintering and gas nitriding of the porous material arranged in the mould in the shape of the first cavity (2) and the second cavity (3) obtained in step (e) to form a titanium nitride coating on said porous material,
g) assembling the porous material coated with titanium nitride obtained in step (f) with the preform of the bipolar plate (1) comprising a titanium nitride coating on the surface thereof.

7. The method according to claim 6, said method further comprising an additional step (a1), between step (a) and step (b) of machining the compacted powder obtained in step (a) to form the inlet and outlet conduits (4, 6, 8, 10).

8. The method according to any of claims 6 to 7, wherein, in step (b), vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa or wherein, in step (b), sintering is carried out in a furnace at a temperature between 900 °C and 1400 °C, in an argon atmosphere, wherein the argon pressure is between 0.05 MPa and 0.2 MPa, for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa or wherein the sintering and gas nitriding of step (b) is carried out in a single furnace, at a temperature of between 850 °C and 1200 °C first under an argon atmosphere, for a period of time between 30 min and 4 h, wherein the argon pressure is between 0.05 MPa and 0.2 MPa, and then under a nitrogen atmosphere for a period of time between 1 h and 4 h, wherein the nitrogen pressure is between 0.05 MPa and 0.2 MPa.

9. The method according to any of claims 6 to 8, wherein, in step (f), vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa or wherein, in step (f), sintering is carried out in a furnace at a temperature between 900 °C and 1400 °C, in an argon atmosphere, wherein the argon pressure is between 0.05 MPa and 0.2 MPa, for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa
or wherein the sintering and gas nitriding of step (f) is carried out in a single furnace, at a temperature of between 900 °C and 1200 °C first under an argon atmosphere, for a period of time between 30 min and 4 h, wherein the argon pressure is between 0.05 MPa and 0.2 MPa, and then under a nitrogen atmosphere for a period of time between 1 h and 4 h, wherein the nitrogen pressure is between 0.05 MPa and 0.2 MPa.

10. A method for manufacturing the bipolar plate (1) according to any of claims 1 to 5, **characterised in that** it comprises the following steps:
i) pouring powders selected from titanium, titanium hydride, titanium alloys or any combination thereof, into a mould comprising
• a first cavity (2) and a second cavity (3),
• a first inlet channel (5) and a second inlet channel (10), and
• a first outlet channel (7) and a second outlet channel (9),
and pressing at a pressure between 100 MPa and 600 MPa;
ii) preparing a homogeneous mixture of
• a powder selected from titanium, titanium hydride, titanium alloys or any combination thereof, and
• an ammonium bicarbonate powder space holder with a particle size between 150 µm and 250 µm,
in a mixer operating at a speed between 50 rpm and 60 rpm for at least a period of 1 h, wherein the proportion by volume of ammonium bicarbonate in the mixture is between 50 % v/v and 70 % v/v,
iii) pouring the homogeneous mixture obtained in step (ii) into the first cavity (2) and into the second cavity (3) of the preform of the bipolar plate (1) obtained in step (i) and pressing at a pressure between 100 MPa and 600 MPa;
iv) removing the ammonium bicarbonate space holder from the product pressed in step (iii) by heat treatment at a temperature between 40 °C and 120 °C for a period of time between 4 h and 12 h,
v) sintering and gas nitriding of the product obtained in step (iv) to form a titanium nitride coating on said product.

11. The method according to claim 10, said method further comprising an additional step (i1), between step (i) and step (ii), of machining the compacted powder obtained in step (i) to form the inlet and outlet conduits (4, 6, 8, 10).

12. The method according to any of claims 10 to 11, wherein step (iii) is carried out sequentially, wherein the homogeneous mixture obtained in step (ii) is first poured into the first cavity (2) of the mould and pressed at a pressure between 100 MPa and 600 MPa and then the homogeneous mixture obtained in step (ii) is poured into the second cavity (3) of the mould and pressed at a pressure between 100 MPa and 600 MPa.

13. The method according to any of claims 10 to 12, wherein, in step (v), vacuum sintering is carried out in a furnace at a temperature between 900 °C and 1400 °C and at a pressure between 0.00001 MPa and 0.01 MPa for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa.

14. The method according to any of claims 10 to 13, wherein, in step (v), sintering is carried out in a furnace at a temperature between 900 °C and 1400 °C, in an argon atmosphere, wherein the argon pressure is between 0.05 MPa and 0.2 MPa, for a period of time between 1 h and 4 h, and the gas nitriding of the sintered product is carried out in a furnace under a nitrogen atmosphere at a temperature of between 850 °C and 1200 °C for a period of time between 1 h and 4 h, wherein the nitrogen pressure is between 0.05 MPa and 0.2 MPa.

15. The method according to any of claims 10 to 13, wherein the sintering and gas nitriding of step (v) is carried out in a single furnace, at a temperature of between 900 °C and 1200 °C first under an argon atmosphere, for a period of time between 30 min and 4 h, wherein the argon pressure is between 0.05 MPa and 0.2 MPa, and then under a nitrogen atmosphere for a period of time between 1 h and 4 h, wherein the nitrogen pressure is between 0.05 MPa and 0.2 MPa.

## Patentansprüche

1. Bipolarplatte (1) einer Protonenaustauschmembran-Brennstoffzelle mit einer Oberseite und einer Unterseite, **dadurch gekennzeichnet, dass**
▪ die Platte (1) aus Titan oder Titanlegierungen besteht,
▪ die Platte (1) Folgendes umfasst
∘ einen ersten Hohlraum (2) auf der Oberseite und einen zweiten Hohlraum (3) auf der Unterseite, wobei in den Hohlräumen (2, 3) ein poröses Material angeordnet ist, wobei das poröse Material aus Titan oder Titanlegierungen besteht, wobei die Poren des porösen Materials miteinander verbunden sind und wobei die Poren des porösen Materials einen Durchmesser zwischen 150 µm und 250 µm aufweisen, gemessen mit einem Rasterelektronenmikroskop,
∘ mindestens eine erste Einlassleitung (4) für ein erstes Gas oder ein zweites Gas, wobei die erste Einlassleitung (4) für ein erstes Gas oder ein zweites Gas über mindestens einen ersten Einlasskanal (5) für ein erstes Gas oder ein zweites Gas mit dem ersten Hohlraum (2) verbunden ist,
∘ mindestens eine zweite Einlassleitung (10) für ein erstes Gas oder ein zweites Gas, wobei die zweite Einlassleitung (10) für ein erstes Gas oder ein zweites Gas über mindestens einen zweiten Einlasskanal (11) für ein erstes Gas oder ein zweites Gas mit dem zweiten Hohlraum (3) verbunden ist,
∘ mindestens eine erste Auslassleitung (6) für ein erstes Gas oder ein zweites Gas, wobei die erste Auslassleitung (6) für ein erstes Gas oder ein zweites Gas über mindestens einen ersten Auslasskanal (7) für ein erstes Gas oder ein zweites Gas mit dem ersten Hohlraum (2) verbunden ist, und
∘ mindestens eine zweite Auslassleitung (8) für ein erstes Gas oder ein zweites Gas, wobei die zweite Auslassleitung (8) für ein erstes Gas oder ein zweites Gas über mindestens einen zweiten Auslasskanal (9) für ein erstes Gas oder ein zweites Gas mit dem zweiten Hohlraum (3) verbunden ist,
▪ und die Platte (1) auf ihrer gesamten Oberfläche mit Titannitrid beschichtet ist.

2. Bipolarplatte (1) gemäß Anspruch 1, wobei die Platte (1) eine Dicke zwischen 500 µm und 3 mm aufweist.

3. Bipolarplatte (1) gemäß einem der Ansprüche 1 oder 2, wobei der erste Hohlraum (2) oder der zweite Hohlraum (3) eine unabhängige Dicke zwischen 150 µm und 1 mm aufweisen.

4. Bipolarplatte (1) gemäß einem der Ansprüche 1 bis 3, wobei der erste Hohlraum (2) oder der zweite Hohlraum (3) konzentrisch zur Bipolarplatte (1) angeordnet sind.

5. Bipolarplatte (1) gemäß einem der Ansprüche 1 bis 4, wobei der erste Hohlraum (2) und der zweite Hohlraum (3) gleiche Abmessungen aufweisen.

6. Verfahren zur Herstellung der Bipolarplatte (1) gemäß einem der Ansprüche 1 bis 5, **dadurch gekennzeichnet, dass** es die folgenden Schritte umfasst:
a) Einfüllen von Pulvern, ausgewählt aus Titan, Titanhydrid, Titanlegierungen oder einer beliebigen Kombination davon, in eine Form, umfassend
• einen ersten Hohlraum (2) und einen zweiten Hohlraum (3),
• einen ersten Einlasskanal (5) und einen zweiten Einlasskanal (10), und
• einen ersten Auslasskanal (7) und einen zweiten Auslasskanal (9), und Pressen bei einem Druck zwischen 100 MPa und 600 MPa; und
b) Sintern und Gasnitrieren des in Schritt (a) erhaltenen Pressprodukts, um einen Vorformling der Bipolarplatte (1) zu erhalten, der eine Titannitridbeschichtung auf seiner Oberfläche aufweist,
c) Herstellen einer homogenen Mischung aus
• einem Pulver, ausgewählt aus Titan, Titanhydrid, Titanlegierungen oder einer beliebigen Kombination davon, und
• einem Ammoniumbicarbonat-Pulver-Platzhalter mit einer Partikelgröße zwischen 150 µm und 250 µm,
in einem Mischer, der mit einer Drehzahl zwischen 50 U/min und 60 U/min betrieben wird, über einen Zeitraum von mindestens 1 Stunde, wobei der Volumenanteil an Ammoniumbicarbonat in der Mischung zwischen 50 % v/v und 70 % v/v liegt,
d) Einfüllen der in Schritt (c) erhaltenen homogenen Mischung in eine Form in der Gestalt des ersten Hohlraums (2) und des zweiten Hohlraums (3) und Pressen bei einem Druck zwischen 100 MPa und 600 MPa;
e) Entfernen des Ammoniumbicarbonat-Platzhalters aus dem in Schritt (d) gepressten Produkt durch Wärmebehandlung bei einer Temperatur zwischen 40 °C und 120 °C über einen Zeitraum zwischen 4 h und 12 h,
f) Sintern und Gasnitrieren des porösen Materials, das in der Form in der Gestalt des ersten Hohlraums (2) und des zweiten Hohlraums (3) angeordnet ist und in Schritt (e) erhalten wurde, um eine Titannitridbeschichtung auf dem porösen Material zu bilden,
g) Zusammenfügen des in Schritt (f) erhaltenen, mit Titannitrid beschichteten porösen Materials mit dem Vorformling der Bipolarplatte (1), der eine Titannitridbeschichtung auf seiner Oberfläche umfasst.

7. Verfahren gemäß Anspruch 6, wobei das Verfahren ferner zwischen Schritt (a) und Schritt (b) einen weiteren Schritt (a1) des Bearbeitens des in Schritt (a) erhaltenen verdichteten Pulvers zur Bildung der Einlass- und Auslassleitungen (4, 6, 8, 10) umfasst.

8. Verfahren gemäß einem der Ansprüche 6 bis 7, wobei in Schritt (b) das Vakuumsintern in einem Ofen bei einer Temperatur zwischen 900 °C und 1400 °C und bei einem Druck zwischen 0,00001 MPa und 0,01 MPa über einen Zeitraum zwischen 1 h und 4 h durchgeführt wird und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt, oder wobei in Schritt (b) das Sintern in einem Ofen bei einer Temperatur zwischen 900 °C und 1400 °C in einer Argonatmosphäre, wobei der Argondruck zwischen 0,05 MPa und 0,2 MPa liegt, über einen Zeitraum zwischen 1 h und 4 h durchgeführt wird und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt, oder wobei das Sintern und das Gasnitrieren von Schritt (b) in einem einzigen Ofen bei einer Temperatur zwischen 850 °C und 1200 °C zunächst unter einer Argonatmosphäre über einen Zeitraum zwischen 30 min und 4 h, wobei der Argondruck zwischen 0,05 MPa und 0,2 MPa liegt, und dann unter einer Stickstoffatmosphäre über einen Zeitraum zwischen 1 h und 4 h durchgeführt werden, wobei der Stickstoffdruck zwischen 0,05 MPa und 0,2 MPa liegt.

9. Verfahren gemäß einem der Ansprüche 6 bis 8, wobei in Schritt (f) das Vakuumsintern in einem Ofen bei einer Temperatur zwischen 900 °C und 1400 °C und bei einem Druck zwischen 0,00001 MPa und 0,01 MPa über einen Zeitraum zwischen 1 h und 4 h durchgeführt wird und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt, oder wobei in Schritt (f) das Sintern in einem Ofen bei einer Temperatur zwischen 900 °C und 1400 °C in einer Argonatmosphäre, wobei der Argondruck zwischen 0,05 MPa und 0,2 MPa liegt, über einen Zeitraum zwischen 1 h und 4 h durchgeführt wird und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt,
oder wobei das Sintern und das Gasnitrieren von Schritt (f) in einem einzigen Ofen bei einer Temperatur zwischen 900 °C und 1200 °C zunächst unter einer Argonatmosphäre über einen Zeitraum zwischen 30 min und 4 h, wobei der Argondruck zwischen 0,05 MPa und 0,2 MPa liegt, und anschließend unter einer Stickstoffatmosphäre über einen Zeitraum zwischen 1 h und 4 h durchgeführt werden, wobei der Stickstoffdruck zwischen 0,05 MPa und 0,2 MPa liegt.

10. Verfahren zur Herstellung der Bipolarplatte (1) gemäß einem der Ansprüche 1 bis 5, **dadurch gekennzeichnet, dass** es die folgenden Schritte umfasst:
i) Einfüllen von Pulvern, ausgewählt aus Titan, Titanhydrid, Titanlegierungen oder einer beliebigen Kombination davon, in eine Form, umfassend
• einen ersten Hohlraum (2) und einen zweiten Hohlraum (3),
• einen ersten Einlasskanal (5) und einen zweiten Einlasskanal (10), und
• einen ersten Auslasskanal (7) und einen zweiten Auslasskanal (9), und Pressen bei einem Druck zwischen 100 MPa und 600 MPa;
ii) Herstellen einer homogenen Mischung aus
• einem Pulver, ausgewählt aus Titan, Titanhydrid, Titanlegierungen oder einer beliebigen Kombination davon, und
• einem Ammoniumbicarbonat-Pulver-Platzhalter mit einer Partikelgröße zwischen 150 µm und 250 µm,
in einem Mischer, der mit einer Drehzahl zwischen 50 U/min und 60 U/min betrieben wird, über einen Zeitraum von mindestens 1 Stunde, wobei der Volumenanteil an Ammoniumbicarbonat in der Mischung zwischen 50 % v/v und 70 % v/v liegt,
iii) Einfüllen der in Schritt (ii) erhaltenen homogenen Mischung in den ersten Hohlraum (2) und in den zweiten Hohlraum (3) des in Schritt (i) erhaltenen Vorformlings der Bipolarplatte (1) und Pressen bei einem Druck zwischen 100 MPa und 600 MPa;
iv) Entfernen des Ammoniumbicarbonat-Platzhalters aus dem in Schritt (iii) gepressten Produkt durch Wärmebehandlung bei einer Temperatur zwischen 40 °C und 120 °C über einen Zeitraum zwischen 4 h und 12 h,
v) Sintern und Gasnitrieren des in Schritt (iv) erhaltenen Produkts, um eine Titannitridbeschichtung auf dem Produkt zu bilden.

11. Verfahren gemäß Anspruch 10, wobei das Verfahren ferner zwischen Schritt (i) und Schritt (ii) einen weiteren Schritt (i1) des Bearbeitens des in Schritt (i) erhaltenen verdichteten Pulvers zur Bildung der Einlass- und Auslassleitungen (4, 6, 8, 10) umfasst.

12. Verfahren gemäß einem der Ansprüche 10 bis 11, wobei Schritt (iii) nacheinander durchgeführt wird, wobei die in Schritt (ii) erhaltene homogene Mischung zunächst in den ersten Hohlraum (2) der Form eingefüllt und bei einem Druck zwischen 100 MPa und 600 MPa gepresst wird und anschließend die in Schritt (ii) erhaltene homogene Mischung in den zweiten Hohlraum (3) der Form eingefüllt und bei einem Druck zwischen 100 MPa und 600 MPa gepresst wird.

13. Verfahren gemäß einem der Ansprüche 10 bis 12, wobei in Schritt (v) das Vakuumsintern in einem Ofen bei einer Temperatur zwischen 900 °C und 1400 °C und bei einem Druck zwischen 0,00001 MPa und 0,01 MPa über einen Zeitraum zwischen 1 h und 4 h durchgeführt wird und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt.

14. Verfahren gemäß einem der Ansprüche 10 bis 13, wobei in Schritt (v) das Sintern in einem Ofen bei einer Temperatur zwischen 900 °C und 1400 °C, in einer Argonatmosphäre, wobei der Argondruck zwischen 0,05 MPa und 0,2 MPa liegt, über einen Zeitraum zwischen 1 h und 4 h durchgeführt wird, und das Gasnitrieren des gesinterten Produkts in einem Ofen unter einer Stickstoffatmosphäre bei einer Temperatur zwischen 850 °C und 1200 °C über einen Zeitraum zwischen 1 h und 4 h durchgeführt wird, wobei der Stickstoffdruck zwischen 0,05 MPa und 0,2 MPa liegt.

15. Verfahren gemäß einem der Ansprüche 10 bis 13, wobei das Sintern und das Gasnitrieren von Schritt (v) in einem einzigen Ofen bei einer Temperatur zwischen 900 °C und 1200 °C zunächst unter einer Argonatmosphäre über einen Zeitraum zwischen 30 min und 4 h, wobei der Argondruck zwischen 0,05 MPa und 0,2 MPa liegt, und anschließend unter einer Stickstoffatmosphäre über einen Zeitraum zwischen 1 h und 4 h durchgeführt werden, wobei der Stickstoffdruck zwischen 0,05 MPa und 0,2 MPa liegt.

## Revendications

1. Plaque bipolaire (1) d'une pile à combustible à membrane échangeuse de protons avec une face supérieure et une face inférieure, **caractérisée en ce que**
▪ ladite plaque (1) est constituée de titane ou d'alliages de titane,
▪ ladite plaque (1) comprend
∘ une première cavité (2) sur la face supérieure et une seconde cavité (3) sur la face inférieure, un matériau poreux étant agencé dans lesdites cavités (2, 3), dans laquelle ledit matériau poreux est constitué de titane ou d'alliages de titane, dans laquelle les pores dudit matériau poreux sont interconnectés et dans laquelle les pores dudit matériau poreux ont un diamètre compris entre 150 µm et 250 µm, tel que mesuré au microscope électronique à balayage,
∘ au moins un premier conduit d'entrée (4) pour un premier gaz ou un second gaz, dans laquelle ledit premier conduit d'entrée (4) pour un premier gaz ou un second gaz est relié à la première cavité (2) à travers au moins un premier canal d'entrée (5) pour un premier gaz ou un second gaz,
∘ au moins un second conduit d'entrée (10) pour un premier gaz ou un second gaz, dans laquelle ledit second conduit d'entrée (10) pour un premier gaz ou un second gaz est relié à la seconde cavité (3) à travers au moins un second canal d'entrée (11) pour un premier gaz ou un second gaz,
∘ au moins un premier conduit de sortie (6) pour un premier gaz ou un second gaz, dans laquelle ledit premier conduit de sortie (6) pour un premier gaz ou un second gaz est relié à la première cavité (2) à travers au moins un premier canal de sortie (7) pour un premier gaz ou un second gaz, et
∘ au moins un second conduit de sortie (8) pour un premier gaz ou un second gaz, dans laquelle ledit second conduit de sortie (8) pour un premier gaz ou un second gaz est relié à la seconde cavité (3) à travers au moins un second canal de sortie (9) pour un premier gaz ou un second gaz,
▪ et ladite plaque (1) est revêtue de nitrure de titane sur toute sa surface.

2. Plaque bipolaire (1) selon la revendication 1, dans laquelle la plaque (1) a une épaisseur comprise entre 500 µm et 3 mm.

3. Plaque bipolaire (1) selon l'une quelconque des revendications 1 ou 2, dans laquelle la première cavité (2) ou la seconde cavité (3) ont une épaisseur indépendante comprise entre 150 µm et 1 mm.

4. Plaque bipolaire (1) selon l'une quelconque des revendications 1 à 3, dans laquelle la première cavité (2) ou la seconde cavité (3) sont agencées de manière concentrique par rapport à la plaque bipolaire (1).

5. Plaque bipolaire (1) selon l'une quelconque des revendications 1 à 4, dans laquelle la première cavité (2) et la seconde cavité (3) ont des dimensions égales.

6. Procédé de fabrication de la plaque bipolaire (1) selon l'une quelconque des revendications 1 à 5, **caractérisé en ce qu'**il comprend les étapes suivantes :
a) versement de poudres choisies parmi le titane, l'hydrure de titane, les alliages de titane ou une quelconque combinaison de ceux-ci, dans un moule comprenant
• une première cavité (2) et une seconde cavité (3),
• un premier canal d'entrée (5) et un second canal d'entrée (10), et
• un premier canal de sortie (7) et un second canal de sortie (9), et pressage à une pression comprise entre 100 MPa et 600 MPa ; et
b) frittage et nitruration par gaz du produit pressé obtenu à l'étape (a) pour obtenir une préforme de la plaque bipolaire (1) comprenant un revêtement en nitrure de titane sur sa surface,
c) préparation d'un mélange homogène
• d'une poudre choisie parmi le titane, l'hydrure de titane, les alliages de titane ou une quelconque combinaison de ceux-ci, et
• d'un agent de maintien d'espace en poudre de bicarbonate d'ammonium avec une taille de particule comprise entre 150 µm et 250 µm,
dans un mélangeur fonctionnant à une vitesse comprise entre 50 tr/min et 60 tr/min pendant au moins un laps de temps de 1 h, dans lequel la proportion en volume de bicarbonate d'ammonium dans le mélange est comprise entre 50 % v/v et 70 % v/v,
d) versement du mélange homogène obtenu à l'étape (c) dans un moule ayant la forme de la première cavité (2) et de la seconde cavité (3) et pressage à une pression comprise entre 100 MPa et 600 MPa ;
e) retrait de l'agent de maintien d'espace au bicarbonate d'ammonium du produit pressé à l'étape (d) par un traitement thermique à une température comprise entre 40 °C et 120 °C pendant un laps de temps compris entre 4 h et 12 h,
f) frittage et nitruration par gaz du matériau poreux agencé dans le moule ayant la forme de la première cavité (2) et de la seconde cavité (3) obtenu à l'étape (e) pour former un revêtement de nitrure de titane sur ledit matériau poreux,
g) assemblage du matériau poreux revêtu de nitrure de titane obtenu à l'étape (f) avec la préforme de la plaque bipolaire (1) comprenant un revêtement de nitrure de titane sur sa surface.

7. Procédé selon la revendication 6, ledit procédé comprenant en outre une étape supplémentaire (a1), entre l'étape (a) et l'étape (b), consistant à usiner la poudre compactée obtenue à l'étape (a) pour former les conduits d'entrée et de sortie (4, 6, 8, 10).

8. Procédé selon l'une quelconque des revendications 6 à 7, dans lequel, à l'étape (b), le frittage sous vide est effectué dans un four à une température comprise entre 900 °C et 1 400 °C et à une pression comprise entre 0,00001 MPa et 0,01 MPa pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa ou dans lequel, à l'étape (b), le frittage est effectué dans un four à une température comprise entre 900 °C et 1 400 °C, dans une atmosphère d'argon, dans lequel la pression d'argon est comprise entre 0,05 MPa et 0,2 MPa, pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa ou dans lequel le frittage et la nitruration par gaz de l'étape (b) sont effectués dans un seul four, à une température comprise entre 850 °C et 1 200 °C d'abord sous une atmosphère d'argon, pendant un laps de temps compris entre 30 min et 4 h, dans lequel la pression d'argon est comprise entre 0,05 MPa et 0,2 MPa, et ensuite sous une atmosphère d'azote pendant un laps de temps compris entre 1 h et 4 h, dans lequel la pression d'azote est comprise entre 0,05 MPa et 0,2 MPa.

9. Procédé selon l'une quelconque des revendications 6 à 8, dans lequel, à l'étape (f), le frittage sous vide est effectué dans un four à une température comprise entre 900 °C et 1 400 °C et à une pression comprise entre 0,00001 MPa et 0,01 MPa pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa ou dans lequel, à l'étape (f), le frittage est effectué dans un four à une température comprise entre 900 °C et 1 400 °C, dans une atmosphère d'argon, dans lequel la pression d'argon est comprise entre 0,05 MPa et 0,2 MPa, pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa
ou dans lequel le frittage et la nitruration par gaz de l'étape (f) sont effectués dans un seul four, à une température comprise entre 900 °C et 1 200 °C, d'abord sous une atmosphère d'argon, pendant un laps de temps compris entre 30 min et 4 h, dans lequel la pression d'argon est comprise entre 0,05 MPa et 0,2 MPa, et ensuite sous une atmosphère d'azote pendant un laps de temps compris entre 1 h et 4 h, dans lequel la pression d'azote est compris entre 0,05 MPa et 0,2 MPa.

10. Procédé de fabrication de la plaque bipolaire (1) selon l'une quelconque des revendications 1 à 5, **caractérisé en ce qu'**il comprend les étapes suivantes :
i) versement de poudres choisies parmi le titane, l'hydrure de titane, les alliages de titane ou une quelconque combinaison de ceux-ci, dans un moule comprenant
• une première cavité (2) et une seconde cavité (3),
• un premier canal d'entrée (5) et un second canal d'entrée (10), et
• un premier canal de sortie (7) et un second canal de sortie (9), et pressage à une pression comprise entre 100 MPa et 600 MPa ;
ii) préparation d'un mélange homogène
• d'une poudre choisie parmi le titane, l'hydrure de titane, les alliages de titane ou une quelconque combinaison de ceux-ci, et
• d'un agent de maintien d'espace en poudre de bicarbonate d'ammonium avec une taille de particule comprise entre 150 µm et 250 µm,
dans un mélangeur fonctionnant à une vitesse comprise entre 50 tr/min et 60 tr/min pendant au moins un laps de temps de 1 h, dans lequel la proportion en volume de bicarbonate d'ammonium dans le mélange est comprise entre 50 % v/v et 70 % v/v,
iii) versement du mélange homogène obtenu à l'étape (ii) dans la première cavité (2) et dans la seconde cavité (3) de la préforme de la plaque bipolaire (1) obtenue à l'étape (i) et pressage à une pression comprise entre 100 MPa et 600 MPa ;
iv) retrait de l'agent de maintien d'espace au bicarbonate d'ammonium du produit pressé à l'étape (iii) par un traitement thermique à une température comprise entre 40 °C et 120 °C pendant un laps de temps compris entre 4 h et 12 h,
v) frittage et nitruration par gaz du produit obtenu à l'étape (iv) pour former un revêtement de nitrure de titane sur ledit produit.

11. Procédé selon la revendication 10, ledit procédé comprenant en outre une étape supplémentaire (i1), entre l'étape (i) et l'étape (ii), consistant à usiner la poudre compactée obtenue à l'étape (i) pour former les conduits d'entrée et de sortie (4, 6, 8, 10).

12. Procédé selon l'une quelconque des revendications 10 à 11, dans lequel l'étape (iii) est effectuée de manière séquentielle, dans lequel le mélange homogène obtenu à l'étape (ii) est d'abord versé dans la première cavité (2) du moule et pressé à une pression comprise entre 100 MPa et 600 MPa et ensuite le mélange homogène obtenu à l'étape (ii) est versé dans la seconde cavité (3) du moule et pressé à une pression comprise entre 100 MPa et 600 MPa.

13. Procédé selon l'une quelconque des revendications 10 à 12, dans lequel, à l'étape (v), le frittage sous vide est effectué dans un four à une température comprise entre 900 °C et 1 400 °C et à une pression comprise entre 0,00001 MPa et 0,01 MPa pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa.

14. Procédé selon l'une quelconque des revendications 10 à 13, dans lequel, à l'étape (v), le frittage est effectué dans un four à une température comprise entre 900 °C et 1 400 °C, dans une atmosphère d'argon, dans lequel la pression d'argon est comprise entre 0,05 MPa et 0,2 MPa, pendant un laps de temps compris entre 1 h et 4 h, et la nitruration par gaz du produit fritté est effectuée dans un four sous une atmosphère d'azote à une température comprise entre 850 °C et 1 200 °C pendant un laps de temps compris entre 1 h et 4 h, dans lequel la pression d'azote est comprise entre 0,05 MPa et 0,2 MPa.

15. Procédé selon l'une quelconque des revendications 10 à 13, dans lequel le frittage et la nitruration par gaz de l'étape (v) sont effectués dans un seul four, à une température comprise entre 900 °C et 1 200 °C, d'abord sous une atmosphère d'argon, pendant un laps de temps compris entre 30 min et 4 h, dans lequel la pression d'argon est comprise entre 0,05 MPa et 0,2 MPa, et ensuite sous une atmosphère d'azote pendant un laps de temps compris entre 1 h et 4 h, dans lequel la pression d'azote est compris entre 0,05 MPa et 0,2 MPa.
